(19) Europäisches Patentamt

European Patent Office

Office européen des brevets

(11) **EP 4 258 374 B1**

(12) **EUROPEAN PATENT SPECIFICATION**

(45) Date of publication and mention
of the grant of the patent:
**08.10.2025 Bulletin 2025/41**

(21) Application number: **22191979.8**

(22) Date of filing: **24.08.2022**

(51) International Patent Classification (IPC):
$H01M\ 4/04^{(2006.01)}$   $H01M\ 4/13^{(2010.01)}$
$H01M\ 4/62^{(2006.01)}$   $H01M\ 10/052^{(2010.01)}$

(52) Cooperative Patent Classification (CPC):
**H01M 4/0404; H01M 4/13; H01M 4/621;**
**H01M 10/052;** Y02E 60/10

(54) **ELECTRODE FOR A SECONDARY BATTERY, A METHOD OF MANUFATURING THE SAME AND SECONDARY BATTERY COMPRISING THE SAME**

ELEKTRODE FÜR EINE SEKUNDÄRBATTERIE, VERFAHREN ZU IHRER HERSTELLUNG UND SEKUNDÄRBATTERIE DAMIT

ÉLECTRODE POUR BATTERIE SECONDAIRE, SON PROCÉDÉ DE FABRICATION ET BATTERIE SECONDAIRE LA COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2022 KR 20220041589**

(43) Date of publication of application:
**11.10.2023 Bulletin 2023/41**

(73) Proprietor: **SK On Co., Ltd.
Seoul 03188 (KR)**

(72) Inventors:
• **LEE, Dong Hoon
Daejeon 34124 (KR)**

• **KIM, Min Hwan
Daejeon 34124 (KR)**
• **LEE, Jae Seong
Daejeon 34124 (KR)**

(74) Representative: **Stolmár & Partner
Patentanwälte PartG mbB
Blumenstraße 17
80331 München (DE)**

(56) References cited:
**WO-A1-2016/067428     US-A1- 2011 262 811
US-A1- 2012 115 027**

## Description

### TECHNICAL FIELD

The following disclosure relates to an electrode for a secondary battery with improved rapid charging performance, a method of manufacturing the same, and a secondary battery comprising the same.

### BACKGROUND

As regulations on automobile fuel efficiency and exhaust gas are being strengthened around the world in recent years, the growth of an electric vehicle (EV) market equipped with a secondary battery is accelerating. As a problem for electric vehicles to be solved, the existing internal combustion engine vehicles may secure a power source required for driving by refueling for a short time, about 5 minutes, whereas in order to charge secondary batteries of electric vehicles, there is a problem that it takes a long time, about 6 to 7 hours based on the 7 kW electric slow charging method.

In order to develop secondary batteries with improved rapid charging performance, a technology for lowering a binder content by developing a binder having high adhesion is being developed. However, there is a limitation in lowering the type of the binder having high adhesion and the binder content. When the binder content is too low, a serious problem occurs in that an electrode active material layer is detached from a current collector during a notching process or a charging/discharging process.

Accordingly, a technology for efficiently distributing the binder inside the electrode is being developed. Typically, a technology of forming electrode slurry having a high binder content in a lower layer and applying electrode slurry having a low binder content in an upper layer on a current collector as a dual layer is being developed. In this case, the high binder content is formed at an interface between the current collector and the electrode active material layer, so it is possible to lower the binder content in the entire electrode active material layer while suppressing the detachment of the active material layer, thereby improving battery performance. However, the technology of forming the electrode slurry as the dual layer has a process limitation in lowering the thickness of the lower layer, so it is difficult to lower a thickness of the lower layer to a certain ratio or less and thus it is difficult to dramatically lower the binder content.

Meanwhile, in addition to the technology of forming the electrode slurry as the dual layer, a technology of forming a binder suspension on the current collector as a thin film primer layer and then forming the electrode slurry on a liquid binder suspension primer layer to more efficiently distribute the binder in the electrode active material layer is being developed. The technology of preparing the electrode active material layer by sequentially applying such a binder suspension-electrode slurry may form a thicker electrode slurry having a lower binder content compared to the above-described dual-layer coating, so the binder content in the electrode active material layer may be greatly reduced, thereby greatly increasing the resistance and rapid charging performance of the battery.

However, when the electrode slurry is applied on an upper portion of the liquid binder suspension, a phenomenon in which the liquid binder suspension with fluidity is pushed due to a high discharge pressure occurs, so the problem occurs in which it is difficult to maintain the binder distribution uniformly and a side portion of the electrode is coated thicker than a center portion to form a protruding side ring, and various electrode quality problems occur, such as uneven distribution of binder composition at the side portion and center portion of the electrode, irregularity in electrode coating width, and dewetting due to a flow of electrode slurry, thereby lowering the productivity of the electrode. In particular, when the side ring phenomenon among the above problems is severe, there may be a problem in that the current collector is torn during winding the electrode manufacturing process, or the electrode active material layer is dented by a rolling roll during rolling.

In addition, the technology of preparing the electrode active material layer by sequentially applying the binder suspension-electrode slurry may lower the resistance and improve the electrode performance in that it may reduce the total binder content in the electrode, but as the binder content is reduced, peeling of the electrode active material layer may still occur due to insufficient adhesion between the current collector and the electrode active material layer.

As described above, there is a need to develop an electrode capable of solving problems such as the side rings and the peeling between the current collector and the electrode active material layer that occur during the electrode manufacturing process and improving the rapid charging performance by optimizing the binder distribution in the electrode and reducing the total binder content, and a secondary battery comprising the same. US 2012/115027 A1 and US 2011/262811 A1 disclose electrodes for secondary batteries.

### SUMMARY

An embodiment of the present invention is directed to increasing productivity of an electrode by lowering a binder content in the electrode and optimizing a binder distribution in the electrode to solve problems such as a side ring occurring during an electrode manufacturing process while improving rapid charging performance of a secondary battery.

In one general aspect, an electrode for a secondary battery includes: a current collector; and an electrode active material layer located on at least one surface of the current collector, in which the following relational expression 1 is satisfied.

$$[\text{Relational Expression 1}]$$

$$1.0 \leq B_{ei}/B_{ci} \leq 2.0$$

In Relational Expression 1, $B_{ci}$ is an interfacial binder content of a center portion of the electrode active material layer in a width direction, and $B_{ei}$ is an interfacial binder content of a side portion of the electrode active material layer in the width direction.

The following relational expression 2 may be further satisfied.

$$[\text{Relational Expression 2}]$$

$$2.5 \leq B_{ei}/B_{es} \leq 5.0$$

In Relational Expression 2, $B_{es}$ is a surface binder content of the side portion of the electrode active material layer in the width direction, and $B_{ei}$ is the interfacial binder content of the side portion of the electrode active material layer in the width direction.

The electrode active material layer may include 0.1 to 2 wt% of binder based on a total weight of the electrode active material layer.

The electrode active material layer may include a styrene butadiene rubber-based binder.

The electrode may include an anode.

A protruding height of the side portion of the electrode active material layer in the width direction may be 0 μm or less.

In another aspect, a method of manufacturing an electrode for a secondary battery includes: a) applying a binder suspension to at least one surface of a current collector; b) drying a side portion of the current collector to which the binder suspension is applied; c) applying electrode slurry containing an electrode active material on the binder suspension; and d) drying a resultant of step c).

In the step a), the binder suspension may be uniformly applied to at least one surface of the current collector.

In step a), a thickness of the applied binder suspension may be 0.1 to 10 μm.

The binder suspension applied in step a) may include 5 to 50 wt% of the binder based on a total weight of the binder suspension, and the electrode slurry applied in step c) may include a binder in an amount of 2.0 wt% or less based on the total weight of the electrode slurry.

Step b) may be performed for 0.001 to 5 seconds at a temperature of 120 to 600°C.

Step d) may be performed for 10 to 300 seconds at a temperature of 50 to 300°C.

A secondary battery, comprising: the electrode of any one of claims 1 to 6.

In still another aspect, a secondary battery comprising the electrode according to the exemplary embodiment of the present invention is provided.

## BRIEF DESCRIPTION OF DRAWINGS

FIG. 1 is a perspective view of an electrode according to an exemplary embodiment of the present invention.
FIG. 2A is a plan view of the electrode of FIG. 1 viewed in a z-axis direction.
FIG. 2B is a cross-sectional view of the electrode of FIG. 1 taken along line I-I'.
FIG. 3 is a diagram for describing a method of measuring a protruding height of a side portion of an electrode active material layer in a width direction.
FIG. 4 is a graph reflecting results of EDS analysis for evaluating a binder distribution in a thickness direction according to whether to dry the side portion of the electrode.
FIGS. 5A to 5C are diagrams illustrating EDS mapping images for evaluating a binder distribution in the thickness direction according to whether to dry the side portion.

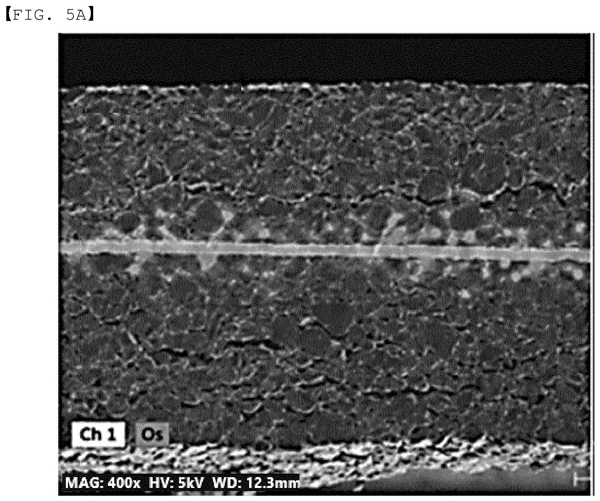

FIG. 5A is a diagram illustrating an EDS mapping image measuring an interfacial binder content in a center portion of the electrode.

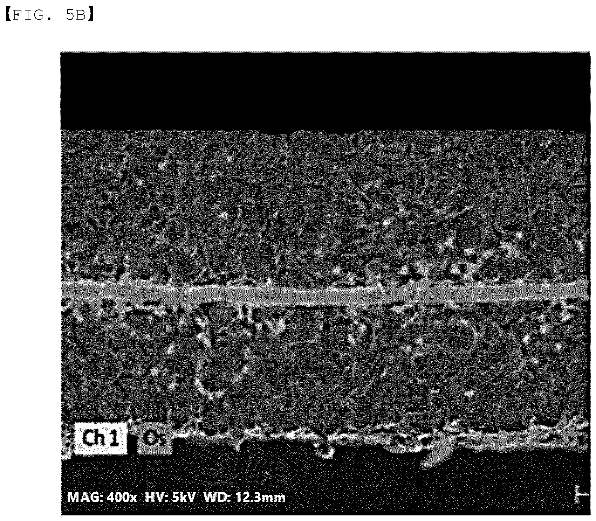

FIG. 5B is a diagram illustrating an EDS mapping image in which an interfacial binder content at a side portion of Comparative Example 1 is measured.

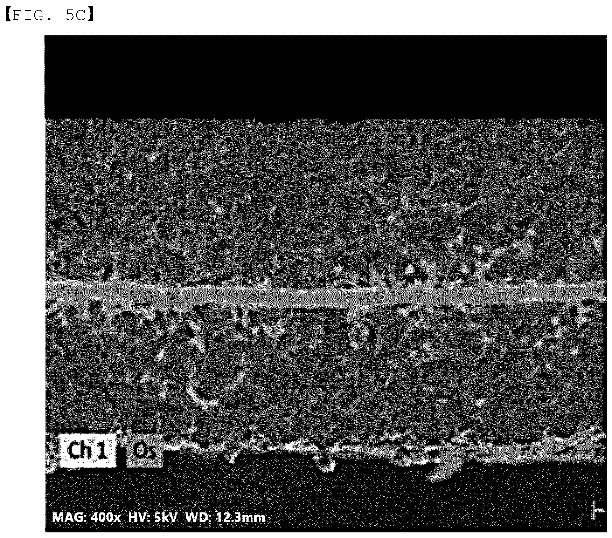

FIG. 5C is a diagram illustrating an EDS mapping image in which an interfacial binder content at a side portion of Example 1 is measured.

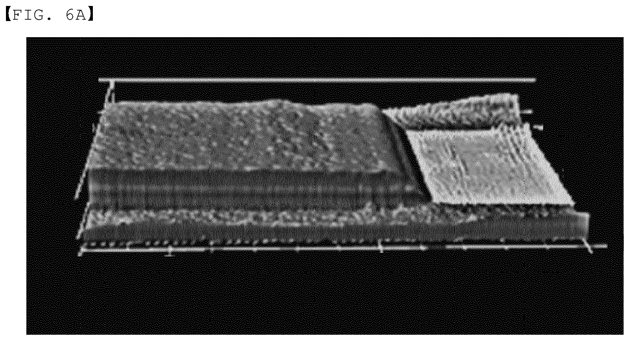

FIG. 6A is a diagram illustrating a 3D image of a cross section of an anode in a width direction according to Example 1 analyzed by confocal microscopy.

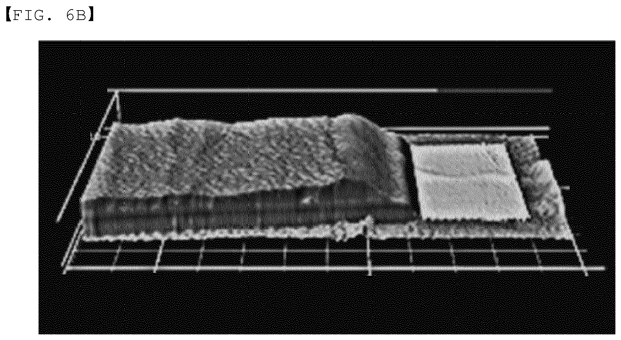

FIG. 6B is a diagram illustrating a 3D image of a cross section of an anode in a width direction according to Comparative Example 1 by confocal microscopy.

[Description of Reference Signs]

1: Electrode
11: Electrode coated part
12: Electrode uncoated part
111: Center portion
112: Side portion

## DETAILED DESCRIPTION OF EMBODIMENTS

Various advantages and features of the present invention and methods accomplishing them will become apparent from the following description of exemplary embodiments with reference to the accompanying drawings. However, the present invention is not limited to exemplary embodiments to be described below, but may be implemented in various different forms, these exemplary embodiments will be provided only in order to make the present invention complete and allow those skilled in the art to completely recognize the scope of the present invention, and the present invention will be defined by the scope of the claims.

Unless defined otherwise, all terms (including technical and scientific terms) used in the present specification have the same meaning as meanings commonly understood by those skilled in the art to which the present invention pertains. Throughout the present specification, unless described to the contrary, "including" any component will be understood to imply the inclusion of other elements rather than the exclusion of other elements. In addition, a singular form includes a plural form unless specially described in the text.

When an element such as a layer, a film, a region, and a plate is "on" or "over" another component in the specification, it can be directly on the other element or intervening elements may be present therebetween.

Terms commonly used in this specification will be first described with reference to the accompanying drawings in order to help the understanding of the present invention. The accompanying drawings are intended to help the understanding of terms, and it does not mean that the terms and technical ideas of the present invention are limitedly interpreted only in the accompanying drawings, and it is to be noted that all contents described in this specification should be interpreted with reasonable consideration. Irrespective of the drawings, the same reference numbers refer to the same components.

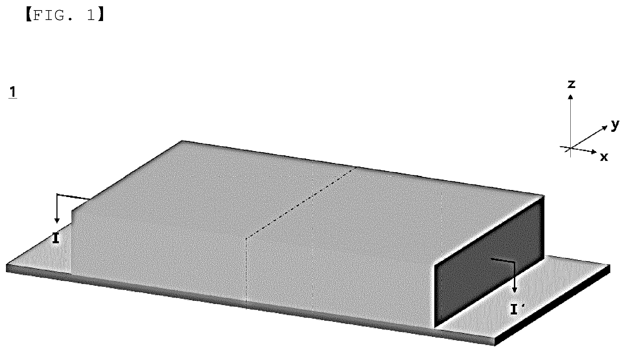

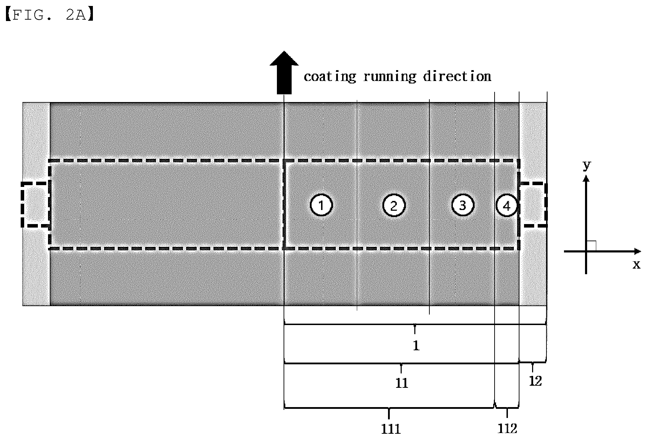

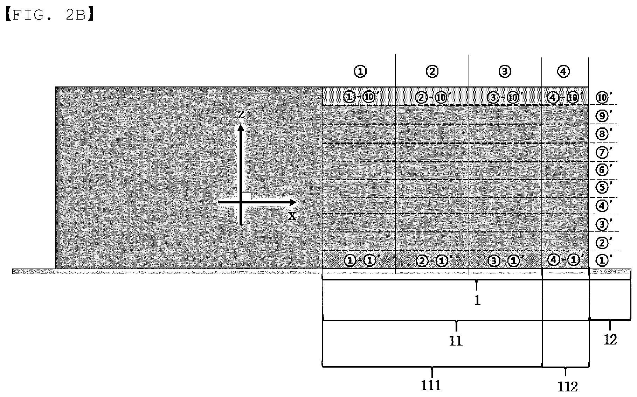

FIG. 1 is a perspective view of an electrode according to an exemplary embodiment of the present disclosure. FIG. 2A is a plan view of the electrode of FIG. 1 viewed in a z-axis direction, and FIG. 2B is a cross-sectional view of the electrode of FIG. 1 taken along line I-I'. A region indicated by a dotted line in FIG. 2A may refer to a part that becomes an electrode when assembling a battery later.

Referring to FIGS. 1 and 2A, in the present specification, a "side portion" refers to an end portion 112 of an electrode coated part 11 in a width direction toward an electrode uncoated part 12 side of an electrode 1 when a direction horizontal to a coating running direction of the electrode is called a longitudinal direction (y-axis direction), and a direction perpendicular to the coating running direction is called a width direction (x-axis direction) during the electrode manufacturing process. In the present invention, the width of the side portion 112 may refer to a width of 20% or less based on the total width of the electrode coated part 11 in the width direction. In addition, in this specification, the term "center portion" refers to a region 111 excluding the side portion 112 based on the width direction in the electrode coated part 11.

Referring to FIGS. 1 and 2B, in this specification, the "interfacial binder content" refers to an average binder content in one section (①') in a thickness direction from an interface between a current collector and an electrode active material layer to the electrode active material layer when a cross section (I-I' cross section) of the electrode active material layer in the thickness direction from the surface of the electrode to the current collector is divided into 10 sections (①' to ⑩') with the same thickness. In other words, the "interfacial binder content" refers to the average binder content in the thickness 10% region (①') based on the total thickness of the electrode active material layer in the thickness direction from the interface between the current collector and the electrode active material layer to the electrode active material layer.

In addition, the "surface binder content" refers to an average binder content in one section (⑩') in the thickness direction from the surface of the electrode to the electrode active material layer when the cross section (I-I' cross section) of the electrode active material layer in the thickness direction from the surface of the electrode to the current collector divided into 10 sections (①' to ⑩') with the same thickness. In other words, the "surface binder content" refers to the average binder content in the thickness 10% region (⑩') based on the total thickness of the electrode active material layer in the thickness direction from the surface of the electrode to the electrode active material layer.

In addition, in the present specification, the binder content may be a value derived after normalizing the average binder content to 1 in the thickness 30% region (⑧' to ⑩') based on the total thickness of the electrode active material layer in the thickness direction from the surface of the electrode to the electrode active material layer. The content of the binder before normalized is, for example, wt%, or, for example, when a styrene butadiene rubber (SBR)-based binder is used as a binder, the content of the binder may be derived as the content (at%) of the adsorbed Os element after exposing the electrode to Os gas. However, the present invention is not limited to the Os element and may be an element capable of representing the binder depending on the type of the binder.

It goes without saying that the definition of the above-described "side portion", "center portion", "interfacial binder content", "surface binder content", binder content, etc., is applied to the electrode during coating running in the electrode assembly process, and as illustrated in FIG. 2A, the same applies to the part that becomes the electrode when assembling the battery later. For example, for the already assembled battery, after disassembling the battery, each side portion, center portion, binder content, etc., can be defined based on the descriptions of the above-described FIGS. 1, 2A, 2B and terms for the obtained electrode.

According to an exemplary embodiment of the present invention, an electrode for a secondary battery includes a current collector, and an electrode active material layer located on at least one surface of the current collector, and satisfies the following relational expression 1.

$$[\text{Relational Expression 1}]$$

$$1.0 \leq B_{ei}/B_{ci} \leq 2.0$$

In Relational Expression 1, $B_{ci}$ is a content of an interfacial binder of a central portion of the electrode active material layer in a width direction, and $B_{ei}$ is a content of an interfacial binder of a side portion of the electrode active material layer in the width direction.

Referring to FIGS. 2A and 2B, the interfacial binder content $B_{ci}$ of the center portion refers to an average value of the interfacial binder contents measured at a center (①-①', ②-①', and ③-①') of an area in which the center portion is divided into 3 equal parts based on the width direction, and the interfacial binder content $B_{ei}$ of the side portion refers to an average value of the interfacial binder content measured at the center (④-①') of the side portion.

In the electrode for a secondary battery that satisfies the above-described Relational Expression 1, the interfacial binder content $B_{ei}$ of the side portion is higher than the interfacial binder content $B_{ci}$ of the center portion, so an interfacial adhesive force of the side portion compared to the center portion is increased. Accordingly, it is possible to suppress peeling of the electrode active material layer by effectively supporting a stress that may occur between the current collector and the electrode active material layer during the battery assembly process and the charging/discharging process.

From the viewpoint of further suppressing the peeling of the electrode active material layer, the electrode for a secondary battery that satisfies the above-described Relational Expression 1 may have $B_{ei}/B_{ci}$ of, for example, greater than 1.0, for example, 1.05 or more, or, for example, 1.1 or more.

However, when the $B_{ei}/B_{ci}$ value is too high, the imbalance of the interfacial binder content and the surface binder content in the center portion and the side portion is severe, so, during the notching process, detachment of the electrode active material layer may occur in the form of particles from the surface of the electrode active material layer rather than the peeling at the boundary between the current collector and the electrode active material layer. In addition, there is a risk that cracks may occur during the drying process due to the insufficient surface binder content of the side portion during the drying process. In consideration of the above problem, $B_{ei}/B_{ci}$ may be, for example, 2.0 or less, or, for example, 1.6 or less, or, for example, 1.4 or less.

In consideration of the above-described effect, $B_{ei}/B_{ci}$ may satisfy at least one of the following inequalities. $1.0 < B_{ei}/B_{ci} \leq 2.0$, or $1.05 \leq B_{ei}/B_{ci} \leq 2.0$, or $1.1 \leq B_{ei}/B_{ci} \leq 2.0$, or $1.0 < B_{ei}/B_{ci} \leq 1.6$, or $1.05 \leq B_{ei}/B_{ci} \leq 1.6$, or $1.1 \leq B_{ei}/B_{ci} \leq 1.6$, or $1.0 < B_{ei}/B_{ci} \leq 1.4$, or $1.05 \leq B_{ei}/B_{ci} \leq 1.4$, or $1.1 \leq B_{ei}/B_{ci} \leq 1.4$.

The electrode may further satisfy Relational Expression 2 below.

$$[\text{Relational Expression 2}]$$

$$2.5 \leq B_{ei}/B_{es} \leq 5.0$$

In Relational Expression 2, $B_{es}$ is a content of a surface binder of the side portion of the electrode active material layer in the width direction, and $B_{ei}$ is the content of the interfacial binder of the side portion of the electrode active material layer in the width direction.

Referring to FIG. 2A and 2B, the surface binder content $B_{es}$ of the side portion of Relational Expression 2 refers to an average value of the surface binder contents measured at the center (④-⑩') of the side portion, and the interfacial binder content $B_{ei}$ of the side portion of Relational Expression 2 refers to an average value of the interfacial binder contents measured at the center (④-①') of the side portion.

In the electrode for secondary battery that further satisfies the above-described Relational Expression 2, the interfacial binder content $B_{ei}$ of the side portion is higher than the surface binder content $B_{es}$, so the detachment of the electrode active material layer of the side portion may be further suppressed. In the viewpoint of securing such an effect, $B_{ei}/B_{es}$ may be, for example, 2.5 or more, or, for example, 2.75 or more, or, for example, 3.0 or more.

However, when the $B_{ei}/B_{es}$ value is too high, not only the effect of suppressing the detachment of the electrode active material layer is saturated, but also since the surface binder content is too low, the detachment occurs in particles or dust form due to cracking of the electrode active material near the surface of the electrode active material layer during the notching process, so there is a risk of safety problems with the assembled secondary battery. In consideration of the above problem, $B_{ei}/B_{es}$ may be, for example, 5.0 or less, or, for example, 4.5 or less, or, for example, 4.0 or less.

In consideration of the above-described effect, $B_{ei}/B_{es}$ may satisfy at least one of the following inequalities. $2.5 \leq B_{ei}/B_{es} \leq 5.0$, $2.75 \leq B_{ei}/B_{es} \leq 5.0$, $3.0 \leq B_{ei}/B_{es} \leq 5.0$, $2.5 \leq B_{ei}/B_{es} \leq 4.5$, $2.75 \leq B_{ei}/B_{es} \leq 4.5$, $3.0 \leq B_{ei}/B_{es} \leq 4.5$, $2.5 \leq B_{ei}/B_{es} \leq 4.0$, $2.75 \leq B_{ei}/B_{es} \leq 4.0$, or $3.0 \leq B_{ei}/B_{es} \leq 4.0$.

The electrode active material layer may include 0.1 to 2 wt%, or 0.1 to 1.8 wt%, or 0.5 to 1.8 wt%, or 0.5 to 1.5 wt% of binder based on the total weight of the electrode active material layer. In the present invention, by densely distributing the binder at the interface between the current collector and the electrode active material layer and reducing the binder content toward the electrode surface, the total amount of the binder included in the entire active material layer may be significantly reduced. Accordingly, it is possible to improve the adhesion between the current collector-electrode active material layer and improve the rapid charging performance.

The electrode active material layer may be formed by applying a binder suspension to at least one surface of the current collector, drying a side portion of the current collector, to which the binder suspension is applied, in the width direction, and then drying a resultant obtained by applying the electrode slurry containing the electrode active material on the binder suspension. However, it should be noted that this is an example for forming the above-described electrode active material layer, and the electrode active material layer according to the present invention may be formed by various methods.

Hereinafter, the binder suspension, the current collector, and the electrode slurry will be described in detail.

The binder suspension may include 5 to 50 wt%, 10 to 50 wt%, 15 to 50 wt%, 10 to 40 wt%, 15 to 40 wt%, 5 to 30 wt%, 10 to 30 wt%, or 15 to 30 wt% of binder based on the total weight of the binder suspension. The binder suspension contains a relatively large amount of binder compared to the electrode slurry containing a large amount of the electrode active material, and therefore, is applied on the current collector to further increase the adhesion between the current collector and the electrode active material layer.

The binder may include a styrene-butadiene rubber (SBR)-based binder, for example, styrene-butyl rubber, a styrene-butyl acrylate copolymer, etc., but the present invention is not limited thereto.

In the case of using the SBR-based binder or the like, the viscosity of the binder suspension is very low because the binder is mixed in the form of particles. In addition, since the size of the binder particles is a small size of 200 nm or less, when the electrode slurry is applied on the binder suspension and then dried, the binder particles into the electrode slurry located on the upper portion are easily migrated by osmotic pressure, so even after drying, a distinct binder layer may not be formed between the binder suspension and the electrode slurry. In addition, the SBR-based binder has good spreadability with the current collector, and therefore, may be uniformly applied to a relatively thin thickness without forming a separate pattern in the width direction of the current collector, thereby further improving the adhesion between the current collector and the electrode active material layer.

On the other hand, unlike the SBR-based binder, polyacrylic acid (PAA), polyvinylidene fluoride (PVDF), carboxymethyl cellulose (CMC), etc. that may be used as an electrode binder in addition to the SBR-based binder are applied in a state of being dissolved in a solvent, and when the electrode is dried, the solvent is sufficiently dried, and then the phase is separated to form a binder layer. For this reason, binders such as the polyacrylic acid are not easily migrated into the upper electrode active material layer during the drying process, and furthermore, there is a risk of increasing the interfacial specific resistance by forming a distinct binder layer between the current collector and the active material layer. In addition, there is a problem in that the pattern is not uniformly distributed in the width direction of the current collector (e.g., island type, dot type). As a result, the adhesion and interfacial specific resistance between the current collector and the electrode active material layer are poor. In consideration of this, the binder suspension may contain or may not contain at least one of polyacrylic acid (PAA), polyvinylidene fluoride (PVDF), and carboxymethyl cellulose (CMC) in amount of 5 wt% or less, 4 wt% or less, or 3 wt% or less based on the total weight of the binder in the binder suspension.

The binder suspension may be prepared including a binder and a solvent. The binder suspension refers to a mixture in which the binders are not dissolved and exist in the form of particles in a solvent, and if necessary, a thickener, a conductive material, and the like may be additionally mixed and used.

The solvent for the anode may be at least one selected from the group consisting of water, pure water, deionized water, distilled water, ethanol, isopropanol, methanol, acetone, n-propanol, and t-butanol, but is not limited thereto.

When the thickener is added, it may stabilize a solution by imparting viscosity to the binder suspension. As an example of the thickener, a cellulose-based compound, and specifically, one or more of carboxymethyl cellulose, hydroxypropylmethyl cellulose, methyl cellulose, alkali metal salts thereof, or the like may be mixed and used. As the alkali metal, Na, K, or Li may be used.

The conductive material is used to impart conductivity to the electrode, and is not particularly limited as long as it is a conventional electronically conductive material that does not cause chemical change in the battery. For example, those selected from the group consisting of natural graphite, artificial graphite, carbon black, acetylene black, ketjen black, carbon fibers, carbon nanotubes, and combinations thereof may be used, but are not limited thereto.

The viscosity of the binder suspension may be 1 to 10,000 cps, or 5 to 5,000 cps, or 10 to 2,000 cps. When the binder suspension having the above viscosity is used, the binder suspension may be uniformly applied on the current collector, and the binder particles may be well migrated upward during the drying process.

As the current collector, those selected from the group consisting of copper foil, nickel foil, stainless steel foil, titanium foil, nickel foam, copper foam, a polymer substrate coated with a conductive metal, and combinations thereof may be used, but are not limited thereto.

The electrode slurry may include 90 wt% or more, 90 to 99.5 wt%, or 95 to 99.5 wt% of the electrode active material, include or may not include 2.0 wt% or less, 1.5 wt% or less, or 1.0 wt% or less of the binder, and include the conductive material and thickener as the balance, based on the total weight of the electrode slurry. Even if the binder content of the electrode slurry is prepared to be low, the adhesion between the current collector and the electrode active material layer may be increased by the migration of binder particles when the binder suspension is dried, and the rapid charging performance may be improved by lowering the resistance of the electrode surface.

The electrode slurry may further include a conductive material, a binder, a thickener, or a combination thereof, if necessary. The conductive material and the thickener may be the materials used in the binder suspension described above, and may be the same or different, but the present invention is not limited thereto.

According to the present invention, the electrode active material layer may have a continuous concentration of the binder in the electrode thickness direction. In the present specification, the "continuous" distribution of the binder means that the binder suspension and the electrode slurry are not formed as separate layers, but the binder is continuous in the electrode active material layer, and thus, the concentration value of the binder is continuous in the thickness direction of the electrode active material layer.

According to the present invention, the electrode may be a cathode or an anode.

When the electrode is a cathode, the electrode active material may be used without limitation as long as it is a cathode active material typically used in secondary batteries. For example, the electrode active material may include It may include any one cathode active material particle selected from the group consisting of $LiCoO_2$, $LiNiO_2$, $LiMn_2O_4$, $LiCoPO_4$, $LiFePO_4$, $LiNiMnCoO_2$, and $LiNi_{1-x-y-z}Co_xM^1_yM^2_zO_2$ ($M^1$ and $M^2$ are each independently any one selected from the group consisting of Al, Ni, Co, Fe, Mn, V, Cr, Ti, W, Ta, and Mg, and x, y and z are each independently an atomic fraction of oxide composition elements and $0 \leq x < 0.5$, $0 \leq y < 0.5$, $0 \leq z < 0.5$, $x+y+z \leq 1$) or a mixture of two or more thereof.

When the electrode is an anode, the electrode active material may be used without limitation as long as it is an anode active material commonly used in secondary batteries. Examples of the anode active material may include a carbon-based anode active material, a silicon-based anode active material, or a mixture thereof, but is not limited thereto. The carbon-based anode active material may be one or more selected from artificial graphite, natural graphite, and hard carbon. The silicon-based anode active material is Si, $SiO_x$ (0<x<2), an Si-Q alloy (wherein Q is an element selected from the group consisting of alkali metal, alkaline earth metal, group 13 element, group 14 element, group 15 element, group 16 element, transition metal, rare earth element, and combinations thereof, and not Si), a Si-carbon composite, or a mixture of at least one of them and $SiO_2$.

According to an exemplary embodiment of the present invention, it is possible to provide an electrode having improved rapid charging performance of a secondary battery by lowering a binder content in the electrode and optimizing a binder distribution in the electrode.

In the electrode for a secondary battery according to an exemplary embodiment of the present invention, a protruding height of the side portion of the electrode active material layer in the width direction may be 0 $\mu$m or less. When the side ring phenomenon is severe, there may be a problem in that the current collector is torn during winding during the electrode manufacturing process, or the electrode active material layer is dented by a rolling roll during rolling. In consideration of this, it is preferable that the protruding height of the side portion is lower. According to an example, the protruding height of the side portion of the electrode active material layer in the width direction may be 0 $\mu$m or less, or -0.2 $\mu$m or less, or -0.3 $\mu$m or less, or -0.5 $\mu$m or less.

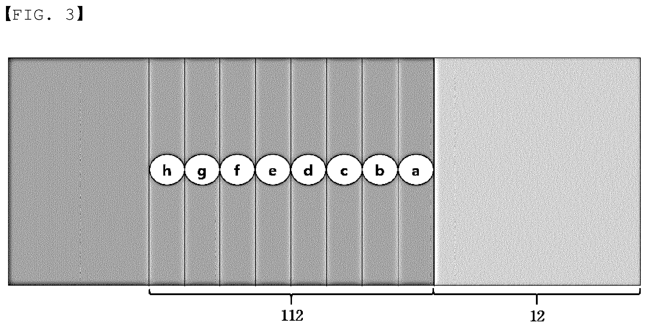

A method of measuring a protruding height of a side portion of an electrode active material layer in a width direction will be described in detail with reference to FIG. 3. Referring to FIG. 3, the protruding height of the side portion is obtained by dividing the side portion of the electrode active material layer into 8 equal parts in the width direction, and then measuring the thickness of the electrode at centers a to h of the 8 divided areas. In the three areas a to c sequentially from an outermost side to an inner side of the side portion in the width direction, the protruding height of the side portion is obtained by subtracting the average thickness value of the thicknesses of the electrodes measured in the remaining areas d to h other than the three areas from the highest thickness value among the measured thicknesses of the electrodes. The thickness of the electrode may be measured with a micrometer (Grade: 331-261-30) of Mitutoyo Co., with a diameter of 3 mm.

According to another exemplary embodiment of the present invention, there is provided a method of manufacturing an electrode for a secondary battery including: a) applying a binder suspension to at least one surface of a current collector; b) drying a side portion of the current collector to which a binder suspension is applied; c) applying electrode slurry containing an electrode active material on the binder suspension; and d) drying a resultant of step c).

In step a), the current collector is prepared, and the binder suspension is applied to at least one surface of the current collector.

Types of the binder and solvent and the current collector are the same as described above. The known method may be applied as the method of preparing a binder suspension. For example, the binder suspension may be prepared by mixing a specific binder such as the SBR-based binder in a solvent and diluting the binder to have a suitable viscosity, but the present invention is not limited thereto.

Step a) may be to uniformly apply the binder suspension to the entirety of at least one surface of the current collector. In the present specification, uniformly applying the binder suspension means uniformly applying the binder suspension on the current collector so that the binder does not form a specific pattern.

According to an exemplary embodiment, in step a), the binder suspension may be applied to a thickness of 0.1 to 10 $\mu$m after drying. The application thickness of the binder suspension may be, for example, 0.5 to 5 $\mu$m, or 0.5 to 3 $\mu$m, or 0.5 to 1 $\mu$m. When the thickness of the applied binder suspension is excessive, the binder suspension is not well mixed with the electrode slurry, so, after the binder suspension is dried, the separation between the layers is clear and the binder layer, which is an insulator, is formed in the electrode active material layer, and thus, the interfacial specific resistance may be increased. On the other hand, when the application thickness of the binder suspension is less than 0.1 $\mu$m, it may be difficult to achieve the intended purpose of the present invention. That is, it is possible to prevent an increase in interfacial specific resistance in the above-described thickness range, improve the interfacial adhesion between the current collector and the electrode active material layer, and improve process defects such as the detachment of the electrode.

According to an exemplary embodiment, the binder suspension may include 5 to 50 wt%, 10 to 50 wt%, 15 to 50 wt%, 10 to 40 wt%, 10 to 40 wt%, or 15 to 40 wt%, 5 to 30 wt%, 10 to 30 wt%, or 15 to 30 wt% of binder based on the total weight of the binder suspension. The electrode slurry may include or may not include 2.0 wt% or less, 1.5 wt% or less, or 1.0 wt% or less of the binder, based on the total weight of the electrode slurry.

In step b), the side portion of the current collector applied with the binder suspension is dried. According to the exemplary embodiment of the present invention, when drying the electrode active material layer to which the binder suspension-electrode slurry is sequentially applied in step d) following the drying in step b), the fluidity of the binder suspension in the side portion of the electrode is reduced, thereby solving problems occurring in the manufacturing process such as the side ring. In addition, it is possible to suppress the non-uniform distribution of the binder composition of the electrode in the width direction due to the difference in the migration rate of the binder in the side portion and the center portion of the electrode, thereby increasing the interfacial adhesion of the side portion of the electrode and improving the process defects such as the detachment of the electrode active material layer.

The drying time of step b) may be, for example, 0.001 to 5 seconds, 0.001 to 3 seconds, 0.001 to 2 seconds, 0.001 to 1 second, 0.005 to 5 seconds, 0.005 to 3 seconds, 0.005 to 2 seconds, 0.005 to 1 second, 0.015 to 5 seconds, 0.015 to 3 seconds, 0.015 to 2 seconds, 0.015 to 1 second, 0.03 to 5 seconds, 0.03 to 3 seconds, 0.03 to 2 seconds, or 0.03 to 1 second.

The drying temperature of step b) may be, for example, 120 to 600°C, 120 to 500°C, 120 to 450°C, 120 to 400°C, 150 to 600°C, 150 to 500°C, 150 to 450°C, 150 to 400°C, 200 to 600°C, 200 to 500°C, 200 to 450°C, or 200 to 400°C.

The drying time or drying temperature of step b) may be changed depending on the production rate of the electrode and the amount of binder applied. When the drying temperature is too high or the drying time is too long, not only the side portion but also the center portion may be dried or an insulating layer may be formed by excessive drying of the binder, which causes a problem in that the resistance of the electrode is increased. On the other hand, when the drying temperature is too low or the drying time is too short, the side portion is not sufficiently dried, so there is a risk of process defects such as the side ring. In an exemplary embodiment, the drying of step b) may be performed at a temperature of 120 to 600°C for 0.001 to 5 seconds.

In step c), the electrode slurry containing the electrode active material is applied on the binder suspension. The electrode active material is the same as described above. As the method for preparing electrode slurry, any method known to be used for forming the known electrode slurry for a secondary battery may be used.

For the application of the binder suspension in step a) and the application of the electrode slurry in step c), any application method known to be used for forming a film by generally applying a liquid phase may be used. For example, spray coating, dip coating, spin coating, gravure coating, doctor blade coating, roll coating, inkjet printing, slot die coating, flexography printing, screen printing, electrostatic printing, micro contact printing, imprinting, reverse offset printing, bar-coating, gravi offset printing, etc., may be used, but is not limited thereto.

In step d), the resultant of step c) is dried.

The drying of step d) may be performed for 10 to 300 seconds, for example, 10 seconds or more, 20 seconds or more, or 30 seconds or more, for example, 300 seconds or less, 280 seconds or less, 260 seconds or less, 240 seconds or less, 220 seconds or less, 200 seconds or less, 180 seconds or less, 160 seconds or less, 150 seconds or less, 140 seconds or less, 130 seconds or less, 120 seconds or less, or 110 seconds or less.

In addition, the drying of step d) may be performed at a temperature of 50 to 300°C, for example, 50°C or higher, 60°C or higher, 70°C or higher, 80°C or higher, or 90°C or higher, for example, 300°C or lower, 280°C or lower, 260°C or less, 240°C or lower, 220°C or lower, or 200°C or lower.

When the drying temperature of step d) is too high or the drying time is very short, the migration of the binder particles is excessive and interfacial adhesion may not be sufficiently implemented. In an exemplary embodiment, the drying of step d) may be performed at a temperature of 50 to 600°C for 10 to 300 seconds.

Then, by rolling the dried electrode under appropriate conditions, an electrode having an electrode active material layer formed on the current collector may be manufactured. In this case, any known rolling method may be applied for the rolling, and the present invention is not limited thereto.

In the method of manufacturing an electrode for a secondary battery according to an exemplary embodiment of the present invention, the binder suspension containing a relatively large amount of binder is first applied, and then the electrode slurry that has a relatively small amount of binder contained on the upper portion of the binder suspension and contains a large amount of electrode active material is applied, so the binder may be densely distributed at the interface between the current collector and the electrode active material layer and in an area adjacent thereto. Accordingly, it is possible to suppress the detachment of the electrode active material layer and improve the rapid charging performance of the battery by lowering the binder content in the entire electrode active material layer.

In addition, in the method of manufacturing an electrode for a secondary battery according to the exemplary embodiment of the present invention, when drying the electrode active material layer to which the binder suspension-electrode slurry of subsequent step d) through the step of drying the side portion of step b) is applied, it is possible to solve problems that occur in the manufacturing process, such as side rings by reducing the fluidity of the binder suspension in the side portion of the side ring. In addition, it is possible to suppress the non-uniform distribution of the binder composition of the electrode in the width direction due to the difference in the migration rate of the binder in the side portion and the center portion of the electrode, thereby increasing the interfacial adhesion of the side portion of the electrode and improving the process defects such as the detachment of the electrode active material layer.

Meanwhile, when the binder suspension is applied on the current collector without performing the above-described step b), in the case where the electrode may be manufactured by applying the binder suspension having a high binder content to the side portion and applying a binder suspension having a low binder content to the center portion, the manufacturing problem that requires two facilities to apply two different suspensions in the width direction may occur, when two suspensions are applied, a high difference may occur at the interface of the applied suspensions, or defects may occur due to non-coating.

According to an exemplary embodiment of the present invention, there is provided a secondary battery including the electrode according to the exemplary embodiment of the present invention. The secondary battery may further include a separator and an electrolytic solution. The electrode is the same as described above.

The separator is not particularly limited as long as it is a known separation membrane in the art. For example, it may be selected from glass fiber, polyester, polyethylene, polypropylene, polytetrafluoroethylene, or a combination thereof, and may be in the form of a non-woven fabric or a woven fabric, and may optionally be used in a single-layer or multi-layer structure.

The electrolytic solution includes a non-aqueous organic solvent and an electrolytic solution salt. The non-aqueous organic solvent is ethylene carbonate (EC), propylene carbonate (PC), dimethyl carbonate (DMC), diethyl carbonate (DEC), ethylmethyl carbonate (EMC), 1,2-dimethoxyethane (DME), $\gamma$-butyrolactone (BL), tetrahydrofuran (THF), 1,3-dioxolane (DOL), diethyl ether (DEE), methyl formate (MF), methyl propionate (MP), sulfolane (S), dimethyl sulfoxide (DMSO), acetonitrile (AN), or a mixture thereof, but is not limited thereto. The electrolytic solution salt is a material that is dissolved in the non-aqueous organic solvent, and thus, serves as a source of electrolytic metal ions in the battery to enable basic secondary battery operation, and promote the movement of electrolytic metal ions between the cathode and the anode. As a non-limiting example, when the electrolytic metal is lithium, the electrolytic salt is $LiPF_6$, $LiBF_4$, LiTFSI, $LiSbF_6$, $LiAsF_6$, $LiClO_4$, $LiCF_3SO_3$, $Li(CF_3SO_2)_2N$, $LiC4F_9SO_3$, $LiSbF_6$, $LiAlO_4$, $LiAlCl_4$, $LiN(C_xF_{2x+1}SO_2)(C_yF2_{y+1}SO_2)$ (however, x and y are natural numbers), LiCl, LiI, or a mixture thereof, but is not limited thereto. In addition, the electrolytic solution salt may use the known material in a concentration suitable for the purpose, and if necessary, may further include the known solvent or additive to improve charging/discharging characteristics, flame retardancy characteristics, and the like.

In the method for manufacturing a lithium secondary battery according to the present invention for achieving the above object, the battery may be manufactured by forming an electrode assembly by sequentially stacking a manufactured anode, a separator, and a cathode, putting the manufactured electrode assembly in a cylindrical battery case or a prismatic shape, and then injecting an electrolytic solution. Alternatively, the battery may be manufactured by stacking the electrode assembly, impregnating the electrode assembly in the electrolytic solution, and putting and sealing the obtained resultant in a battery case.

For the battery case used in the present invention, those commonly used in the field may be adopted, and there is no limitation in the appearance according to the use of the battery. For example, a cylindrical type using a can, a prismatic type, a pouch type, a coin type, etc., may be used.

The secondary battery according to the present invention may be used not only in a battery cell used as a power source for a small device, but also may be preferably used as a unit cell in a medium-large battery module including a plurality of battery cells. Preferred examples of the medium-large device include, but are not limited to, an electric vehicle, a hybrid electric vehicle, a plug-in hybrid electric vehicle, a system for power storage, etc., but are not limited thereto.

Hereinafter, the present invention will be described in detail by way of examples, but these are for describing the present invention in more detail, and the scope of the present invention is not limited by the following examples.

**Examples**

(Example 1)

<Manufacturing of anode>

A binder suspension was prepared by diluting an SBR (Zeon BM451B) suspension as a binder and a CMC thickener with pure water so that the SBR suspension and the CMC thickener are a weight ratio of 99:1.

An anode active material in which artificial graphite (D50:13 $\mu$m) and natural graphite (D50:10 $\mu$m) are mixed in a weight ratio of 5:5, a CMC thickener, and an SBR binder were added to water in a weight ratio of 98.5:1:0.5 to prepare an anode slurry having a viscosity of 5,000 cps.

The binder suspension prepared on one surface of a copper current collector (copper foil with a thickness of 8 $\mu$m) was applied to a thickness of 1 $\mu$m by a gravure coating method, and then side portions on both sides of the copper current collector in the width direction to which the binder suspension was applied were dried. The prepared anode slurry was applied to a thickness of 83 $\mu$m using a slot die, dried, and the binder suspension and anode slurry were applied to another surface in the same manner and dried. In this case, the drying was performed under the conditions described in Table 1 below. After the drying, the rolling (rolling density: 1.68 g/cm$^3$) was performed to manufacture an anode with an anode active material layer formed thereon.

In this case, the anode used an electrode having a width of 100 mm based on an electrode coated part, and the side portion was an area of 20 mm in width at an end portion in the width direction, and the center portion was an area of 80 mm in width excluding the side portion.

<Manufacturing of cathode>

A slurry was prepared by mixing Li[Ni$_{0.88}$Co$_{0.1}$Mn$_{0.02}$]O$_2$ as a cathode active material, carbon black as a conductive material, and polyvinylidene fluoride (PVDF) as a binder in a weight ratio of 96.5:2:1.5. The slurry was uniformly applied to an aluminum foil having a thickness of 12 $\mu$m, and vacuumdried to manufacture a cathode for a secondary battery.

<Manufacturing of secondary battery>

The cathode and the anode are each stacked by notching to a predetermined size, and a separator (polyethylene, thickness of 13 $\mu$m) is disposed between the cathode and the anode to form an electrode cell, and then each tab portion of the cathode and the anode was welded. The assembly of the welded cathode/separator/anode was put in a pouch, and three sides were sealed except for an electrolytic solution injection side. In this case, the part with the electrode tab was included in the sealing part. An electrolytic solution was injected through the remaining surfaces except for the sealing part, and the remaining surfaces were sealed and then impregnated for 12 hours or more. As the electrolytic solution, after 1M LiPF$_6$ is dissolved in a mixed solvent of EC/EMC/DEC (25/45/30; volume ratio), those to which 1 wt% of vinylene carbonate (VC), 0.5 wt% of 1,3-propanesultone (PRS), and 0.5 wt% of lithium bis(oxalato)borate (LiBOB) based on a total weight of electrolytic solution are added were used.

Thereafter, pre-charging was performed for 36 minutes with a current corresponding to 0.25C. After degassing is performed after 1 hour and aging is performed for more than 24 hours, chemical charge and discharge were performed (charging condition CC-CV 0.2C 4.2V 0.05C CUT-OFF, discharging condition CC 0.2C 2.5V CUTOFF).

Thereafter, standard charging and discharging was performed (charging condition CC-CV 0.33C 4.2V 0.05C CUT-OFF, discharging condition CC 0.33C 2.5V CUT-OFF).

(Examples 2 and 3, Comparative Examples 1 to 3)

Examples 2 and 3 and Comparative Examples 1 to 3 were performed under the same manufacturing conditions as in Example 1, except that the conditions for drying the side portion during the manufacturing of the anode were performed under the conditions described in Table 1.

In Table 1 below, the drying was performed with a hot air blower in consideration of the drying conditions such as temperature.

The binder content was derived by sufficiently exposing the electrode to Os gas and then using the content (at%) of the adsorbed Os element, and $B_{ei}/B_{ci}$ and $B_{ei}/B_{es}$ were derived by utilizing the binder content and the contents described in Relational Expressions 1 and 2 described above in this specification.

Here, $B_{ci}$ is the interfacial binder content of the center portion of the electrode active material layer in the width direction, $B_{ei}$ is the interfacial binder content of the side portion of the electrode active material layer in the width direction, and $B_{es}$ is the surface binder content of the side portion of the electrode active material layer in the width direction, and each binder content was measured through the method described above in the present specification, and then calculated to derive each value.

The "protruding height of the side portion" in Table 1 is the protruding height of the side portion of the electrode active material layer in the width direction, and was measured according to the method for measuring a protruding height of a side portion in a width direction described in the present specification. The thickness of the electrode may be measured with a micrometer (Grade: 331-261-30) of Mitutoyo Co. with a diameter of 3 mm.

In Table 1, "whether imprinting occurred" was evaluated as dent if the number of times of dent on the electrode was 3 times or more due to detachment of electrode active material particles during a 200 m rolling running at a speed of 20 m/min with a roll-to-roll press machine.

[Table 1]

| | Drying condition of side portion | | Binder distribution | | Protruding height of side portion (μm) | Whether dent occurs (o/x) |
|---|---|---|---|---|---|---|
| | Whether to perform (o/x) | Temperature (°C) | $B_{ei}/B_{ci}$ | $B_{ei}/B_{es}$ | | |
| Example 1 | ○ | 200 | 1.26 | 3.16 | -0. 7 | x |
| Example 2 | ○ | 500 | 1.34 | 3.22 | -1.0 | x |
| Example 3 | ○ | 400 | 1.39 | 3.18 | -3.2 | x |
| Comparative Example 1 | x | - | 0.71 | 2.15 | 15.6 | ○ |
| Comparative Example 2 | ○ | 50 | 0.82 | 1.95 | 2.6 | ○ |
| Comparative Example 3 | ○ | 100 | 0.73 | 1.89 | 2.7 | ○ |

The "electrode adhesion" in Table 2 below was measured between the anode active material layer of the manufactured anode and the anode current collector with an adhesion measurement device (IMADA DS2-50N) of an electrode substrate. In the measurement method, after a double-sided tape was attached to an adhesion measuring jig and the manufactured anode current collector was positioned on the tape, the roller reciprocates the manufactured anode current collector 10 times to attach the anode current collector. Thereafter, the tape was cut to a width of 18 mm and attached to the center portion of the measuring jig with the tape side facing down. Thereafter, the adhesion to the anode active material layer was measured while moving the adhesion measuring device at a speed of 300 rpm in a direction perpendicular to 90° of an adhesive surface.

The "interfacial specific resistance" of Table 2 below was measured by applying a measurement current of 10 mA to the manufactured anode with an electrode resistance measuring device of XF057 battery from HIOKI Co.

For "cell resistance (DC-IR)" in Table 2 below, the cell resistance of the manufactured secondary battery was measured. The cell resistance was measured by the following method. The manufactured secondary batteries of each Example and Comparative Example were charged (0.3C CC/CV charge 4.2V 0.05C cut), rested for 10 minutes, and discharged (0.3C CC discharge SOC50 cut). The secondary battery was rested for 1 hour at SOC50, 1C discharged for 10 seconds, and then rested for 10 seconds again. In this case, the cell resistance (DC-IR) was calculated by dividing a difference between a voltage after resting at the SOC50 for 1 hour and a voltage after the 1C discharge for 10 seconds by a current.

[Table 2]

| | Electrode adhesion (N/cm) | | Interfacial specific resistance ($\Omega \cdot cm^2$) | | Cell resistance DC-IR (m$\Omega$) |
|---|---|---|---|---|---|
| | Center portion | Side portion | Center portion | Side portion | |
| Example 1 | 0.22 | 0.31 | 0.018 | 0.016 | 1.34 |
| Example 2 | 0.21 | 0.24 | 0.02 | 0.019 | 1.33 |
| Example 3 | 0.22 | 0.33 | 0.014 | 0.014 | 1.31 |
| Comparative Example 1 | 0.22 | 0.16 | 0.013 | 0.013 | 1.35 |
| Comparative Example 2 | 0.21 | 0.17 | 0.019 | 0.02 | 1.36 |
| Comparative Example 3 | 0.20 | 0.16 | 0.016 | 0.018 | 1.33 |

The results of Tables 1 and 2 are compared and evaluated. Referring to Tables 1 and 2, in Examples 1 to 3 of the present invention, the protruding height of the side portion was 0 $\mu$m or less, and the electrode active material layer did not detach, so no dents occurred during the rolling.

On the other hand, in Comparative Example 1, the drying of the side portion was not performed, and when the entire electrode active material layer of the binder suspension-anode slurry was dried, the side portion was dried rapidly, and the migration of the binder in the side portion was more actively performed compared to the center portion. As the migration rate of the binder was different in the side portion and the center portion, the binder distribution in the electrode active material layer became non-uniform. As a result, the $B_{ei}/B_{ci}$ value was less than 1.0, and the $B_{ei}/B_{es}$ value was less than 2.5, so the adhesion between the electrode active material layer and the current collector was reduced in the side portion. In addition, the protruding height of the side portion greatly exceeded 0 $\mu$m, and many particle dents occurred during the rolling.

Comparative Examples 2 and 3 dried the side portion, but the drying temperature was lower than the temperature limited by the present invention. As a result, the side portion was not dried sufficiently, so the $B_{ei}/B_{ci}$ value was less than 1.0, and the $B_{ei}/B_{es}$ value was less than 2.5, so the adhesion between the electrode active material layer and the current collector was reduced in the side portion. In addition, the side portion was not sufficiently dried, so the protruding height of the side portion exceeded 0 $\mu$m, and many particle dents occurred during the rolling.

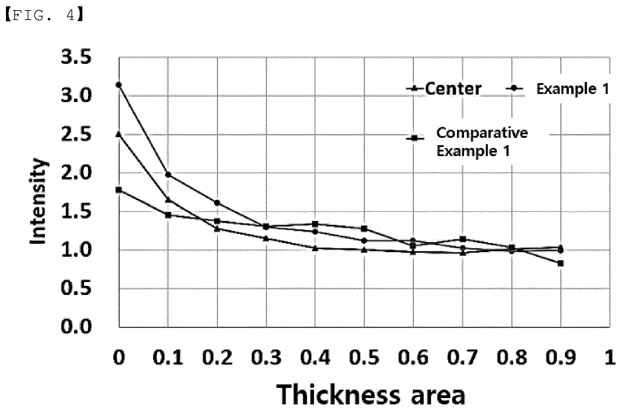

FIGS. 4 and 5A to 5C are graphs reflecting the results of EDS analysis for evaluating the binder distribution in the thickness direction according to whether to dry the side portion, and EDS mapping images. For the EDS analysis, the manufactured electrode was sufficiently exposed to Os gas, and then the analysis was performed on the Os element.

FIG. 4 is a graph reflecting results of EDS analysis for evaluating a binder distribution in a thickness direction according to whether to dry the side portion of the electrode. In FIG. 4, a line of "Example 1" indicates the distribution of the binder content of the side portion of Example 1 in the thickness direction, and a line of "Comparative Example 1" indicates the distribution of the binder content of the side portion of Comparative Example 1 in the thickness direction. A line of "center" indicates the binder content distribution of the center portion of Example 1 in the thickness direction. Since the line of the "Center" has little change in the distribution of binder content depending on whether the drying of the side portion is performed, the distribution of the binder content of the side portion of Example 1 and Comparative Example according to whether the drying of the side portion is performed was evaluated by utilizing the distribution of the binder content of the center portion of Example 1 in the thickness direction. In a horizontal axis 'thickness area' of the graph of FIG. 3, "0" was the interface between the current collector and the electrode active material layer, and "1" was the surface of the electrode active material layer, so the binder distribution was indicated in the thickness direction from the interface to the surface. A vertical axis "Intensity" of the graph of FIG. 3 is an index for evaluating the relative amount of the binder content, and indicates the EDS intensity for the Os element. The higher the intensity value, the higher the binder content in the corresponding thickness area.

Referring to FIG. 4, in Example 1, the interfacial binder content $B_{ei}$ of the side portion was higher than the interfacial binder content $B_{ci}$ of the center portion, and adhesion between the current collector and the electrode active material layer of the side portion was measured to be higher than that in the center portion. On the other hand, in Comparative Example 1, the interfacial binder content $B_{ei}$ of the side portion was lower than the interfacial binder content

$B_{ci}$ of the center portion, so the adhesion between the current collector and the electrode active material layer of the side portion was measured to be lower than the adhesion in the center portion. As a result, the risk of detachment of the electrode active material layer during the assembly process of the secondary battery or the cycle evaluation of the secondary battery was relatively high.

FIGS. 5A to 5C are diagrams illustrating EDS mapping images for evaluating a binder distribution in the thickness direction according to whether to dry the side portion. FIG. 5A is an EDS mapping image in which the interfacial binder content of the center portion is measured, FIG. 5B is an EDS mapping image in which the interfacial binder content of the side portion of Comparative Example 1 is measured, and FIG. 5c is an EDS mapping image in which the interfacial binder content of the side portion of Example 1 is measured. Referring to FIG. 5C among the accompanying drawings, it can be visually confirmed that the interfacial binder content of the side portion is high in the case of Example 1 in which the drying of the side portion is performed.

FIGS. 6A and 6B are 3D images obtained by analyzing the cross section of the anode in the width direction according to Example 1 and Comparative Example 1. Referring to FIGS. 6A and 6B, in Comparative Example 1 compared to Example 1, it may be visually confirmed that the thickness of the side portion of the anode is significantly thicker than the thickness of the center portion.

According to an exemplary embodiment of the present invention, it is possible to provide an electrode having improved rapid charging performance of a secondary battery by lowering a binder content in the electrode and optimizing a binder distribution in the electrode.

The method of manufacturing an electrode for a secondary battery according to an exemplary embodiment of the present invention includes applying a binder suspension containing a relatively large amount of binder, drying a side portion of a current collector to which the binder suspension is applied, and applying electrode slurry containing a large amount of electrode active material. Accordingly, it is possible to solve problems that occur in a manufacturing process, such as side rings by solving problems of a non-uniform thickness and a non-uniform distribution of a binder composition in a width direction of an electrode due to a difference in a migration rate of the binder at a side portion and a center portion of the electrode when drying an electrode active material layer in which a binder suspension-electrode slurry is sequentially applied.

**Claims**

1. An electrode (1) for a secondary battery, comprising:

   a current collector; and
   an electrode active material layer located on at least one surface of the current collector,
   wherein the following relational expression 1 is satisfied:

   [Relational Expression 1]

   $$1.0 \leq B_{ei}/B_{ci} \leq 2.0$$

   where in Relational Expression 1, $B_{ci}$ is an interfacial binder content of a center portion (111) of the electrode active material layer in a width direction, and $B_{ei}$ is an interfacial binder content of a side portion (112) of the electrode active material layer in the width direction,
   wherein the interfacial binder content is an average binder content in the thickness 10% region based on the total thickness of the electrode active material layer in the thickness direction from the interface between the current collector and the electrode active material layer to the electrode active material layer,
   wherein the side portion (112) is a region of 20% from the side based on the total width of the electrode coated part (11) along the x-axis,
   wherein the center portion (111) is region excluding the side portion (112) in the electrode coated part (11).

2. The electrode (1) of claim 1, wherein the following relational expression 2 is further satisfied:

   [Relational Expression 2]

   $$2.5 \leq B_{ei}/B_{es} \leq 5.0$$

where in Relational Expression 2, $B_{es}$ is a surface binder content of the side portion of the electrode active material layer in the width direction, and $B_{ei}$ is the interfacial binder content of the side portion of the electrode active material layer in the width direction,

wherein the surface binder content is an average binder content in the thickness 10% region based on the total thickness of the electrode active material layer in the thickness direction from the surface of the electrode (1) to the electrode active material layer.

3. The electrode (1) of claim 1, wherein the electrode active material layer includes 0.1 to 2 wt% of binder based on a total weight of the electrode active material layer.

4. The electrode (1) of claim 1, wherein the electrode active material layer includes a styrene butadiene rubber-based binder.

5. The electrode (1) of claim 1, wherein the electrode (1) includes an anode.

6. The electrode (1) of claim 1, wherein, when the side portion (112) of the electrode active material layer is divided into 8 equal parts in the width direction (x-axis), the value obtained by subtracting the average thickness of the electrode thickness measured in the remaining regions excluding following three regions from the highest thickness among the electrode thicknesses measured in three regions sequentially from the outermost to the innermost region is 0 or less.

7. A method of manufacturing an electrode (1) for a secondary battery according to any one of claims 1 to 6, comprising:

   a) applying a binder suspension to at least one surface of a current collector;
   b) drying a side portion of the current collector to which the binder suspension is applied;
   c) applying electrode slurry containing an electrode active material on the binder suspension; and
   d) drying a resultant of step c).

8. The method of claim 7, wherein in the step a), the binder suspension is uniformly applied to at least one surface of the current collector.

9. The method of claim 7, wherein in step a), a thickness of the applied binder suspension is 0.1 to 10 $\mu$m.

10. The method of claim 7, wherein the binder suspension applied in step a) includes 5 to 50 wt% of the binder based on a total weight of the binder suspension, and

    the electrode slurry applied in step c) includes a binder in an amount of 2.0 wt% or less based on the total weight of the electrode slurry.

11. The method of claim 7, wherein step b) is performed for 0.001 to 5 seconds at a temperature of 120 to 600°C.

12. The method of claim 7, wherein step d) is performed for 10 to 300 seconds at a temperature of 50 to 300°C.

13. A secondary battery comprising the electrode of any one of claims 1 to 6.


**Patentansprüche**

1. Elektrode (1) für eine Sekundärbatterie, umfassend:

   einen Stromkollektor; und
   eine Elektroden-Aktivmaterialschicht, die auf mindestens einer Oberfläche des Stromkollektors angeordnet ist, wobei die folgende relationale Beziehung 1 erfüllt ist:

   [Beziehungsausdruck 1]

   $$1{,}0 \leq B_{ei}/B_{ci} \leq 2{,}0$$

   wobei in der relationalen Beziehung 1 $B_{ci}$ der Bindemittelgehalt an der Grenzfläche eines Mittelabschnitts (111) der Elektrodenaktivmaterialschicht in Breitenrichtung ist und $B_{ei}$ der Bindemittelgehalt an der Grenzfläche eines Seitenabschnitts (112) der Elektrodenaktivmaterialschicht in Breitenrichtung ist, wobei der Gehalt an Grenzflächenbindemittel ein durchschnittlicher Bindemittelgehalt in dem 10 %-Bereich der Dicke ist, bezogen auf die Gesamtdicke der Elektrodenaktivmaterialschicht in der Dickenrichtung von der Grenzfläche zwischen dem Stromkollektor und der Elektrodenaktivmaterialschicht bis zur Elektrodenaktivmaterialschicht, wobei der Seitenabschnitt (112) ein Bereich von 20 % von der Seite ausgehend von der Gesamtbreite des elektrodengeschichteten Teils (11) entlang der x-Achse ist , wobei der Mittelteil (111) ein Bereich ist, der den Seitenteil (112) in dem mit der Elektrode beschichteten Teil (11) ausschließt .

2. Elektrode (1) nach Anspruch 1, wobei die folgende relationale Beziehung 2 zusätzlich erfüllt ist:

$$[Beziehungsausdruck\ 2]$$

$$2{,}5 \le B_{ei}/B_{es} \le 5{,}0$$

wobei in der relationalen Beziehung 2 $B_{es}$ der Oberflächenbindemittelgehalt des Seitenabschnitts der Elektrodenaktivmaterialschicht in Breitenrichtung ist und $B_{ei}$ der Grenzflächenbindemittelgehalt des Seitenabschnitts der Elektrodenaktivmaterialschicht in Breitenrichtung ist, wobei der Oberflächenbindemittelgehalt ein durchschnittlicher Bindemittelgehalt in dem 10 %-Dickenbereich, bezogen auf die Gesamtdicke der Elektrodenaktivmaterialschicht in Dickenrichtung von der Oberfläche der Elektrode (1) bis zur Elektrodenaktivmaterialschicht , ist.

3. Elektrode (1) nach Anspruch 1, wobei die Elektrodenaktivmaterialschicht 0,1 bis 2 Gew.-% Bindemittel, bezogen auf das Gesamtgewicht der Elektrodenaktivmaterialschicht, enthält.

4. Elektrode (1) nach Anspruch 1, wobei die Elektrodenaktivmaterialschicht ein Bindemittel auf StyrolButadien-Kautschukbasis enthält.

5. Elektrode (1) nach Anspruch 1, wobei die Elektrode (1) eine Anode umfasst.

6. Elektrode (1) nach Anspruch 1, wobei, wenn der Seitenabschnitt (112) der Elektrodenaktivesmaterialschicht in 8 gleiche Teile in der Breitenrichtung (x-Achse) unterteilt wird, der Wert, der durch Subtrahieren der durchschnittlichen Dicke der Elektrodendicke, gemessen in den verbleibenden Bereichen mit Ausnahme der folgenden drei Bereiche, von der höchsten Dicke unter den Elektrodendicken, gemessen in drei Bereichen nacheinander vom äußersten zum innersten Bereich, erhalten wird, 0 oder weniger ist .

7. Verfahren zur Herstellung einer Elektrode (1) für eine Sekundärbatterie gemäß einem der Ansprüche 1 bis 6, umfassend:

a) Aufbringen einer Bindemittelsuspension auf mindestens eine Oberfläche eines Stromkollektors;
b) Trocknen eines Seitenabschnitts des Stromkollektors, auf den die Bindemittelsuspension aufgebracht ist;
c) Aufbringen einer Elektrodenaufschlämmung, die ein Elektrodenaktivmaterial enthält, auf die Bindemittelsuspension; und
d) Trocknen des Ergebnisses aus Schritt c).

8. Verfahren nach Anspruch 7, wobei in Schritt a) die Bindemittelsuspension gleichmäßig auf mindestens eine Oberfläche des Stromkollektors aufgebracht wird.

9. Verfahren nach Anspruch 7, wobei in Schritt a) die Dicke der aufgetragenen Bindemittelsuspension 0,1 bis 10 $\mu$m beträgt.

10. Verfahren nach Anspruch 7, wobei die in Schritt a) aufgetragene Bindemittelsuspension 5 bis 50 Gew.-% des Bindemittels, bezogen auf das Gesamtgewicht der Bindemittelsuspension, enthält und die in Schritt c) aufgetragene Elektrodensuspension ein Bindemittel in einer Menge von 2,0 Gew.-% oder weniger, bezogen auf das Gesamtgewicht der Elektrodensuspension, enthält.

11. Verfahren nach Anspruch 7, wobei Schritt b) 0,001 bis 5 Sekunden lang bei einer Temperatur von 120 bis 600 °C durchgeführt wird.

12. Verfahren nach Anspruch 7, wobei Schritt d) 10 bis 300 Sekunden lang bei einer Temperatur von 50 bis 300 °C durchgeführt wird.

13. Sekundärbatterie, die die Elektrode gemäß einem der Ansprüche 1 bis 6 umfasst.


**Revendications**

1. Électrode (1) pour une batterie secondaire, comprenant :

   un collecteur de courant ; et
   une couche de matériau actif d'électrode située sur au moins une surface du collecteur de courant,
   dans laquelle l'expression relationnelle 1 suivante est satisfaite :

   $$[\text{Relational Expression 1}]$$

   $$1,0 \leq B_{ei}/B_{ci} \leq 2,0$$

   où, dans l'expression relationnelle **1**, $B_{ci}$ est une teneur en liant interfacial d'une partie centrale (111) de la couche de matériau actif d'électrode dans le sens de la largeur, et $B_{ei}$ est une teneur en liant interfacial d'une partie latérale (112) de la couche de matériau actif d'électrode dans le sens de la largeur,
   où la teneur en liant interfacial est une teneur moyenne en liant dans la région représentant 10 % de l'épaisseur, sur la base de l'épaisseur totale de la couche de matériau actif d'électrode dans le sens de l'épaisseur, depuis l'interface entre le collecteur de courant et la couche de matériau actif d'électrode jusqu'à la couche de matériau actif d'électrode,
   dans laquelle la partie latérale (112) est une région de 20 % à partir du côté sur la base de la largeur totale de la partie revêtue d'électrode (11) le long de l'axe x ,
   dans laquelle la partie centrale (111) est une région excluant la partie latérale (112) dans la partie revêtue d'électrode (11) .

2. Électrode (1) selon la revendication 1, dans laquelle l'expression relationnelle 2 suivante est également satisfaite :

   $$[\text{Expression relationnelle 2}]$$

   $$2,5 \leq B_{ei}/B_{es} \leq 5,0$$

   où, dans l'expression relationnelle 2, $B_{es}$ est la teneur en liant de surface de la partie latérale de la couche de matériau actif d'électrode dans le sens de la largeur, et $B_{ei}$ est la teneur en liant interfacial de la partie latérale de la couche de matériau actif d'électrode dans le sens de la largeur,
   la teneur en liant de surface étant une teneur moyenne en liant dans la région représentant 10 % de l'épaisseur totale de la couche de matériau actif d'électrode dans le sens de l'épaisseur, depuis la surface de l'électrode (1) jusqu'à la couche de matériau actif d'électrode .

3. Électrode (1) selon la revendication 1, dans laquelle la couche de matériau actif d'électrode comprend 0,1 à 2 % en poids de liant par rapport au poids total de la couche de matériau actif d'électrode.

4. Électrode (1) selon la revendication 1, dans laquelle la couche de matériau actif de l'électrode comprend un liant à base de caoutchouc styrène-butadiène.

5. Électrode (1) selon la revendication 1, dans laquelle l'électrode (1) comprend une anode.

6. Électrode (1) selon la revendication 1, dans laquelle, lorsqu' , lorsque la partie latérale (112) de la couche de matériau actif d'électrode est divisée en 8 parties égales dans le sens de la largeur (axe x), la valeur obtenue en soustrayant l'épaisseur moyenne de l'épaisseur d'électrode mesurée dans les régions restantes à l'exclusion des trois régions suivantes de l'épaisseur la plus élevée parmi les épaisseurs d'électrode mesurées dans trois régions séquentiellement de la région la plus externe à la région la plus interne est inférieure ou égale à .

7. Procédé de fabrication d'une électrode (1) pour une batterie secondaire selon l'une quelconque des revendications 1 à 6, comprenant :

> a) l'application d'une suspension de liant sur au moins une surface d'un collecteur de courant ;
> b) sécher une partie latérale du collecteur de courant sur laquelle la suspension de liant est appliquée ;
> c) l'application d'une bouillie d'électrode contenant un matériau actif d'électrode sur la suspension de liant ; et
> d) sécher le résultat de l'étape c).

8. Procédé selon la revendication 7, dans lequel, à l'étape a), la suspension de liant est appliquée uniformément sur au moins une surface du collecteur de courant.

9. Procédé selon la revendication 7, dans lequel, à l'étape a), l'épaisseur de la suspension de liant appliquée est comprise entre 0,1 et 10 $\mu$m.

10. Procédé selon la revendication 7, dans lequel la suspension de liant appliquée à l'étape a) comprend 5 à 50 % en poids du liant par rapport au poids total de la suspension de liant, et
la bouillie d'électrode appliquée à l'étape c) comprend un liant en une quantité de 2,0 % en poids ou moins par rapport au poids total de la bouillie d'électrode.

11. Procédé selon la revendication 7, dans lequel l'étape b) est réalisée pendant 0,001 à 5 secondes à une température de 120 à 600 °C.

12. Procédé selon la revendication 7, dans lequel l'étape d) est réalisée pendant 10 à 300 secondes à une température de 50 à 300 °C.

13. Batterie secondaire comprenant l'électrode selon l'une quelconque des revendications 1 à 6.

【FIG. 1】

【FIG. 2A】

【FIG. 2B】

【FIG. 3】

112                    12

【FIG. 4】

【FIG. 5A】

【FIG. 5B】

【FIG. 5C】

【FIG. 6A】

【FIG. 6B】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012115027 A1

- US 2011262811 A1